# DEMANDE DE BREVET EUROPEEN

(11) **EP 2 299 094 A1**
(43) Date de publication de la demande: **23.03.2011**
(21) Numéro de dépôt: 10305584.4
(22) Date de dépôt: 03.06.2010
(51) Int. Cl.: F02D 41/00, F02D 41/02, F02D 41/40

(54) **Procédé de commande d'un moteur diesel suralimenté à recirculation de gaz d'échappement à basse pression**

(30) Priorité: 15.09.2009 FR 0956320
(71) Demandeur: Renault S.A.S., 92100 Boulogne-Billancourt (FR)
(72) Inventeur: Kandil, Amina, 10108 Rabat (MA); Teysseyre, Nicolas, 91580 Etrechy (FR)

(57) **Abrégé**

La présente invention concerne un procédé de commande d'un moteur à combustion pour véhicule automobile du type Diesel suralimenté par un turbo compresseur, ledit moteur comportant d'une part, un système de post traitement des gaz situé dans la ligne d'échappement et comprenant un filtre à particules et un piège à oxydes d'azote et d'autre part, un système à recirculation des gaz d'échappement à basse pression. Selon l'invention, le procédé consiste, lors d'un mode de fonctionnement du moteur à richesse supérieure ou égale à 1 utilisant une cartographie de réglage prédéfinie à mesurer (S3) une température (T₂₁) réprésentative de la température dans le collecteur d'admission, et à modifier (S4, S5) la cartographie de réglage lorsque la température (T₂₁) mesurée passe en-deçà d'un seul minimal (Tₛₑᵤₗₜ₋ₘᵢₙ) de température prédéterminé.

Procédé particulièrement adapté aux phases de régénération du piège à à oxyde d'azote.

## Description

La présente invention concerne de façon générale les moteurs thermiques à combustion interne pour véhicule automobile, du type Diesel suralimenté par un turbo compresseur, utilisant d'une part, un système de post traitement des gaz situé dans la ligne d'échappement et comportant notamment un filtre à particules et un piège à oxydes d'azote situé entre la turbine du turbo compresseur et le filtre à particules, et d'autre part, un système à recirculation des gaz d'échappement à basse pression.

L'évolution de la réglementation sur les émissions polluantes des véhicules à moteur thermique conduit, notamment pour les véhicules Diesels à motorisation dite à "mélange pauvre", à la mise en place de tels post-traitements. Le filtre à particules et le piège à oxydes d'azote nécessitent d'être nettoyés périodiquement tout au long de leur utilisation (roulage du véhicule). L'opération dite de régénération du piège à oxydes d'azote s'effectue en faisant opérer le moteur en condition de "mélange riche" par modification de ses réglages, de façon à augmenter la quantité de "réducteurs" (hydrocarbures imbrulés, monoxyde de carbone, hydrogène) afin de convertir les molécules d'oxyde d'azote retenues dans le piège en molécules inertes d'azote, eau et dioxyde de carbone.

Il est connu par ailleurs d'équiper un moteur thermique à combustion interne à essence et surtout Diesel de type conventionnel d'un système à recirculation de gaz d'échappement, ou système EGR, dans le but de réduire la production des polluants dont les oxydes d'azote. La production d'oxydes d'azote est essentiellement liée à la présence d'oxygène et à des températures de combustion élevées.

On peut réduire la quantité d'oxydes d'azote produite en mélangeant le gaz admis par le moteur avec un gaz inerte qui va permettre de ralentir la vitesse de combustion et absorber les calories, ce qui va se traduire par une baisse de la température de combustion. Le principe d'un système EGR consiste à prélever une partie des gaz d'échappement, comportant des gaz inertes, pour la faire recirculer dans le conduit d'admission. Un système EGR est ainsi classiquement constitué d'un conduit de recirculation des gaz interposé entre le conduit d'échappement et le conduit d'admission, d'une vanne dite vanne EGR, permettant, sous la commande du module électronique de commande moteur, de régler le débit du gaz brûlé qui va être redirigé vers le conduit d'admission, Le système EGR peut comporter également un échangeur thermique pour refroidir les gaz brûlés en recirculation, et éviter ainsi une augmentation non souhaitable de production de particules.

Pour améliorer encore les performances anti-pollution des moteurs Diesel, plusieurs modifications de la boucle de recirculation des gaz d'échappement sont possibles. L'une d'elles, décrite par exemple dans le document FR 2 894 623 au nom de la Demanderesse, consiste à réaliser une boucle dite à basse pression dont le principe consiste à prélever les gaz d'échappement en aval du filtre à particules, entre ce dernier et le silencieux, ces gaz d'échappement à basse pression ainsi prélevés étant ensuite réintroduits en amont du compresseur. L'ensemble du mélange admis dans le moteur traverse un échangeur de chaleur jouant le rôle de refroidisseur monté entre le compresseur et le collecteur d'admission. L'efficacité de ce refroidisseur étant élevée et les gaz d'échappement prélevés en aval du filtre à particules ayant des températures beaucoup plus faibles qu'à la sortie du moteur, une telle boucle de recirculation à basse pression permet d'obtenir des températures plus faibles pour le mélange admis que dans le cas d'une boucle de recirculation classique même lorsque celle-ci comporte un dispositif de refroidissement. De ce fait, il est possible de réduire encore la quantité d'oxydes d'azote produite à l'échappement grâce à l'abaissement de la température. De plus, selon cette technologie, les gaz d'échappement réintroduits dans le moteur contiennent très peu de particules de suie puisqu'ils ont tout d'abord traversé le filtre à particules, contrairement au cas d'une boucle de recirculation de gaz d'échappement de type classique où les gaz d'échappement réintroduits à l'admission ne sont pas filtrés et encrassent la boucle de recirculation ainsi que le collecteur d'admission et le moteur.

Comme indiqué précédemment, pour purger de façon périodique les oxydes d'azote piégés, il est connu d'utiliser, lors de la phase de régénération du piège, un mode de combustion spécifique garantissant un mélange riche à l'échappement ainsi que des conditions de thermique dans le piège. Par mélange riche, on entend ici un mélange dont la richesse, c'est-à-dire le rapport entre le dosage réel et le dosage stoechiométrique, est supérieure ou égale à 1, par opposition au fonctionnement normal, c'est-à-dire hors phases de régénération, d'un moteur Diesel, pour lequel la richesse est inférieure à 1. Au-delà du besoin exprimé en richesse et en thermique dans le piège, un certain nombre de contraintes sont imposées, telles que des limites de stabilité de combustion, de fumées, de consommation et de bruit de combustion. Nous nous intéresserons dans la suite plus spécifiquement au problème du bruit de combustion.

Il est connu, dans le cadre d'un fonctionnement à mélange riche, d'utiliser, en plus d'une injection principale dans chaque cylindre du moteur pour chaque cycle de combustion, une injection dite « pilote », préalable à l'injection principale. Lors de cette injection pilote, une petite quantité de carburant est injectée dans la chambre de combustion du cylindre, ce qui entraîne une augmentation de température et de pression dans la chambre de combustion. Ceci permet de raccourcir le retard d'allumage de l'injection principale, de réduire le gradient de pression entre l'injection pilote et l'injection principale, et par conséquent de réduire les bruits de combustion. L'utilisation d'une rampe commune (ou « Common rail » en terminologie anglo-saxonne) permettant d'alimenter en carburant tous les injecteurs permet d'adapter le déroulement de l'injection, notamment en termes de débit d'injection et de phasage entre les injections pilotes et principales, aux conditions de fonctionnement du moteur.

En pratique, le réglage des modes de combustion pour réglage riche est effectué dans certaines conditions, proches en général d'un fonctionnement nominal. Ce fonctionnement nominal repose sur des calibrations convenablement appliquées en air, taux EGR, phasages et débit d'injection. Ainsi, lors des calibrations effectuées sur banc de test, on sait établir, pour différents points de fonctionnement du moteur, des cartographies de réglage permettant de respecter les limitations, notamment en termes de bruit.

Néanmoins, les essais effectués par la Demanderesse ont montré que, lors des phases de fonctionnement à mélange riche pour un moteur Diesel suralimenté utilisant un système à recirculation des gaz d'échappement à basse pression, et notamment lors des phases de régénération du piège à oxydes d'azote, des dispersions par rapport au fonctionnement nominal pouvaient apparaître lors du roulage véhicule, amenant à dépasser le niveau de bruit de combustion admissible, perturbant ainsi le confort et l'agrément du conducteur. Ce dernier peut être amené à s'interroger sur le bon fonctionnement de son moteur, alors même que ce fonctionnement ne doit pas être remis en cause.

Ainsi, les cartographies de réglage s'avèrent insuffisantes pour garantir en toutes circonstances le respect de la limitation du bruit et il est nécessaire de pouvoir corriger ce problème.

La présente invention a pour objectifs d'une part, de pouvoir déterminer en temps réel à quel moment il est nécessaire de corriger le réglage pour limiter le bruit, et d'autre part, de corriger effectivement ces réglages.

On sait que le bruit de combustion est lié au gradient de pression entre l'injection pilote et l'injection principale.

Une première possibilité pour déterminer l'instant auquel une correction des réglages s'impose pourrait consister à mesurer en temps réel la pression dans le cylindre de manière à en déduire le gradient de pression. Le contrôle de l'évolution de ce gradient de pression permettrait ainsi de détecter l'instant auquel ce gradient passerait en-deçà d'une valeur seuil prédéfinie. Cette solution est cependant coûteuse car elle doit faire intervenir des capteurs de pression dans chaque cylindre, ou au moins un capteur de pression sur un cylindre.

L'invention propose un mode de pilotage du moteur permettant à moindre coût de rester dans le mode de combustion à richesse 1 tout en assurant un niveau de bruit combustion restant dans les limites du cahier des charges agrément et/ou acoustique pour l'automobiliste.

Plus précisément, la présente invention a pour objet un procédé de commande d'un moteur de commande d'un moteur à combustion pour véhicule automobile du type Diesel suralimenté par un turbo compresseur, ledit moteur comportant d'une part, un système de post traitement des gaz situé dans la ligne d'échappement et comprenant un filtre à particules et un piège à oxydes d'azote et d'autre part, un système à recirculation des gaz d'échappement à basse pression, caractérisé en ce qu'il comprend les étapes successives suivantes lors d'un mode de fonctionnement du moteur à richesse supérieure ou égale à 1 utilisant une cartographie de réglage prédéfinie:
- Mesure d'une température représentative de la température dans le collecteur d'admission;
- Modification de la cartographie de réglage lorsque la température mesurée passe en-deçà d'un seul minimal de température prédéterminé.

L'étape de modification de la cartographie de réglage consiste de préférence à diminuer le phasage d'une injection pilote et/ou à augmenter le débit de carburant de ladite injection pilote.

Dans un mode de réalisation particulièrement avantageux, l'étape de modification de la cartographie de réglage consiste d'abord à diminuer le phasage de l'injection pilote, puis à augmenter le débit de carburant de ladite injection pilote si la température mesurée est toujours en-deçà du seul minimal de température prédéterminé. Ceci évite toute surconsommation non nécessaire de carburant, pour le cas où la correction par réduction du phasage s'avérerait suffisante.

L'invention et les avantages qu'elle procurent seront mieux compris au vu de la description non limitative suivante faite en référence aux figures annexées, dans lesquelles :
- la figure 1 illustre schématiquement les différents composants d'un moteur Diesel à quatre cylindres conforme à l'invention, doté d'un système EGR à basse pression et d'un système de post traitement comportant notamment un piège à oxydes d'azote ;
- la figure 2 représente les variations du niveau de bruit en fonction de la température dans le collecteur d'admission pour un point de fonctionnement particulier à richesse 1 du moteur de la figure 1 ;
- la figure 3 représente les variations du niveau de bruit en fonction du phasage de l'injection pilote pour ce même point de fonctionnement ;
- la figure 4 représente les variations du niveau de bruit en fonction du débit de carburant de l'injection pilote pour ce même point de fonctionnement ;
- la figure 5 illustre schématiquement les différentes étapes mises en oeuvre dans une version préférée du procédé de contrôle selon l'invention.

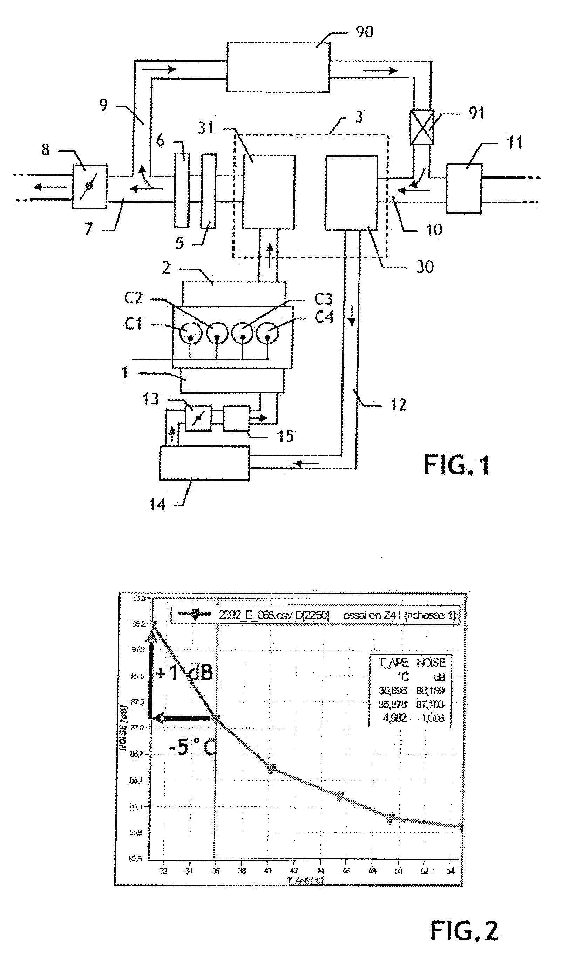

La figure 1 représente schématiquement, à titre d'exemple non limitatif, un moteur Diesel à quatre cylindres schématisés ici sous les références C1 à C4. Ce moteur comporte classiquement un collecteur d'admission 1, un collecteur d'échappement 2, un turbo compresseur 3 composé d'une turbine 31 et d'un compresseur 32. Le collecteur d'échappement reçoit les gaz d'échappement issus des chambres de combustion de chacun des cylindres. Les différentes chambres de combustion sont représentées schématiquement sur la figure 1 sous la référence unique 4 pour ne pas surcharger la figure. Ces gaz d'échappement passent ensuite à travers la turbine 31, puis sont acheminés successivement vers un piège 5 à oxydes d'azote 5 et vers un filtre 6 à particules. En aval de ce filtre 6 dans le sens de circulation des gaz d'échappement, une partie de ces gaz est évacuée dans une conduite 7 d'échappement dans laquelle se trouve un volet 8 d'échappement, alors qu'une autre partie est remise en circulation dans une conduite 9 de dérivation vers le compresseur 32. Dans cette conduite 9 de dérivation, un refroidisseur 90 et une vanne de recirculation 91 sont aptes respectivement à refroidir et contrôler un débit de ces gaz. Par ailleurs, la conduite 9 de recirculation débouche dans une autre conduite d'arrivée d'air 10 dans laquelle de l'air peut circuler selon un débit mesuré en amont par exemple par un débitmètre 11. Cet air provient classiquement d'un filtre à air connecté à une entrée d'air (non représentés). L'ensemble composé du filtre 6 à particules, de la conduite 9 de recirculation avec le refroidisseur 90 et la vanne 91, du turbo compresseur 3 et de la conduite 10 d'arrivée d'air constitue classiquement un système de recirculation des gaz d'échappement à basse pression dont le taux de recirculation des gaz, communément appelé taux EGR, est régulé par le volet 8 d'échappement et la vanne 91 de recirculation.

Le mélange d'air et de gaz provenant du système de recirculation de gaz passe au travers du compresseur 32 et est acheminé vers le collecteur 1 d'admission par un conduit 12 d'admission. Un volet 13 d'admission permet avantageusement de contrôler le débit du mélange air/gaz EGR. Ce mélange air/gaz EGR est de préférence également refroidi par un refroidisseur 14 disposé dans le conduit 12 d'admission, en amont du volet 13 d'admission.

Le principe de l'invention repose sur le fait que le bruit de combustion d'un moteur diesel, notamment à richesse 1, est influencé, entre autres paramètres, à l'ordre 1 par :
- la température dans le collecteur d'admission,
- le débit d'injection pilote,
- et le phasage entre les injections pilote et principale.

Le graphique de la figure 2 montre, pour un réglage relatif à un point de fonctionnement richesse 1 à 2250 tours/minutes et une pression moyenne effective de 5 bars, l'évolution du bruit de combustion en fonction de la température dans le collecteur d'admission pour le moteur de la figure 1. D'après ce graphique, on constate que le bruit de combustion est extrêmement sensible aux variations de températures, notamment aux températures basses (typiquement inférieures à 60° C). En particulier, à des températures avoisinant 32° C, une diminution de 5° C de la température du collecteur d'admission peut provoquer une augmentation du bruit de quasiment 1 dB.

Lors de l'établissement des cartographies de réglages indiquées précédemment, on définit, pour chaque point de fonctionnement à richesse 1 donné, un débit d'air et un niveau de taux d'EGR. Pour un réglage à température ambiante (par exemple dans une cellule de banc moteur), ce débit d'air et ce taux d'EGR correspondent à un niveau de température du collecteur d'admission permettant d'obtenir un niveau de bruit compatible avec le cahier des charges.

Néanmoins, sur la durée de vie du véhicule, des dispersions influant fortement sur la température dans le collecteur d'admission, et donc sur le niveau de bruit, vont apparaître, liées notamment à la baisse d'efficacité des refroidisseurs 14 et 91 fonction de leur niveau d'encrassement et des conditions environnementales.

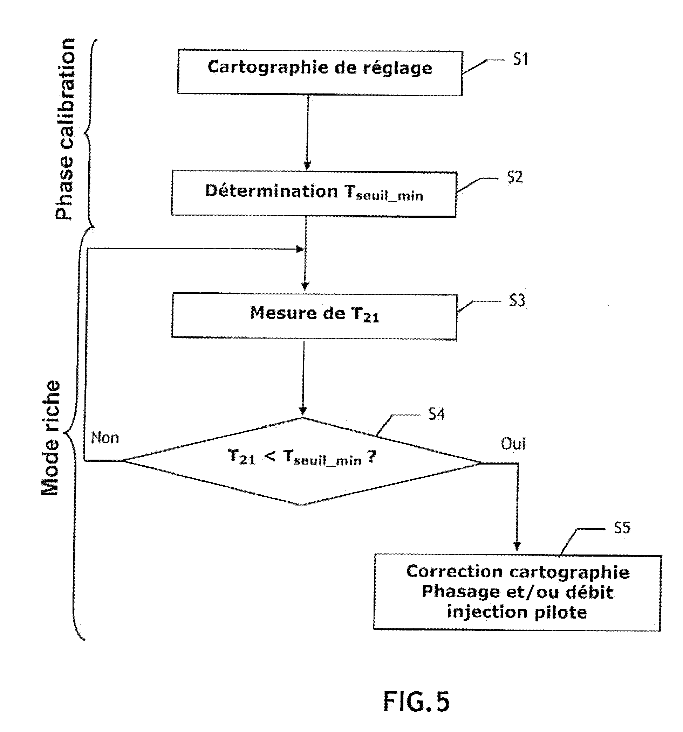

Une phase de calibration préalable consiste donc d'une part, à établir pour chaque point de fonctionnement à richesse 1, une cartographie de réglage (étape S1 sur la figure 5), et d'autre part, à identifier l'intervalle de températures [T_{scuil_min} ; T_{seuil_max}] dans lequel la cartographie de réglage reste compatible avec les limites de bruit imposés, ou à tout le moins le seuil minimal de température T_{seuil_min} en-deçà duquel le bruit devient supérieur aux limites imposées (étape S2 sur la figure 5).

Pendant le roulage du véhicule, et plus précisément lors d'un mode de fonctionnement en richesse supérieure ou égale à 1, selon une cartographie de réglage donnée, le procédé selon l'invention consiste à mesurer en temps réel une valeur représentative de la température dans le collecteur d'admission 1 de manière à pouvoir déterminer l'instant à partir duquel cette température mesurée passe en deçà du seuil minimal de température T_{seuil_min}, et appliquer le cas échéant une correction de la cartographie de réglage. Ces trois étapes de mesure, de comparaison au seuil minimal de température T_{seuil_min}, et de correction de la cartographie sont référencées respectivement S3, s4 et S5 sur la figure 5.

Pour la mise en oeuvre de la première étape de mesure S3, on utilise avantageusement un capteur de température 15 déjà existant à d'autres fins dans le moteur de la figure 1, ce capteur étant placé entre le volet d'admission 13 et le collecteur d'admission 1.

Il convient néanmoins de noter que le capteur pourrait être localisé n'importe où entre le refroidisseur 14 et le collecteur d"admission. De plus, en l'absence du refroidisseur 14 dans la structure du moteur, une mesure effectuée à n'importe quel endroit entre le compresseur 32 et le collecteur d'admission 1 sera représentative de la température dans le collecteur d'admission.

La modification de la cartographie de réglage en tant que telle peut consister à agir sur le phasage de l'injection principale.

Néanmoins, dans le mode de réalisation préféré de la présente invention, très adapté aux courtes durées liées aux phase de régénération du piège, la modification de cartographie consistera à agir plutôt sur le phasage et/ou le débit de l'injection pilote qui précède l'injection principale.

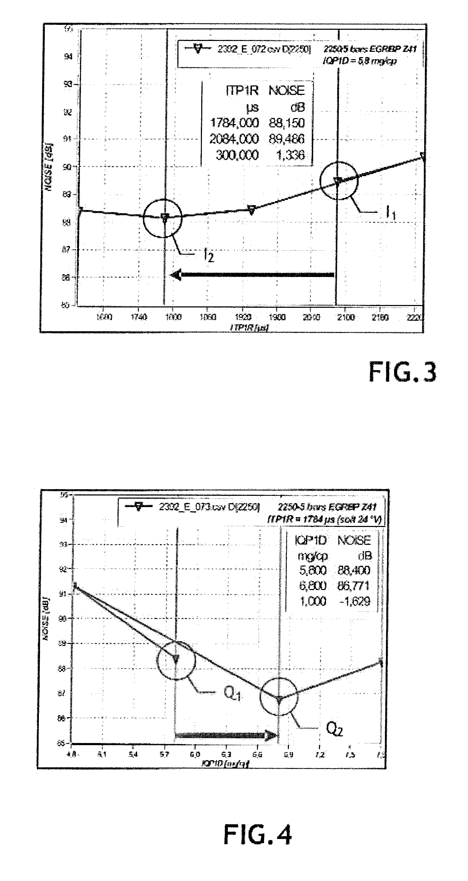

Le graphique de la figure 3 montre, pour un réglage relatif au même point de fonctionnement richesse 1 à 2250 tours/minutes et une pression moyenne effective de 5 bars, l'évolution du bruit de combustion en fonction du phasage de l'injection pilote pour le moteur de la figure 1, c'est-à-dire de la durée entre l'injection pilote et l'injection principale. La valeur entourée I₁ correspond au niveau de bruit obtenu sans correction de la cartographie de réglage. D'après ce graphique, on constate l'existence d'un optimum en bruit pour une valeur de phasage I₂ inférieure à la valeur I₁. La modification de la cartographie de réglage peut donc consister à diminuer le phasage de l'injection pilote, de préférence d'une valeur prédéfinie, de l'ordre de 300 µsecondes par rapport à un phasage initial I₁ imposé par dite cartographie de réglage. On rapproche ainsi l'injection pilote de injection principale.

Le graphique de la figure 4 montre quant à lui, pour un réglage relatif au même point de fonctionnement richesse 1 à 2250 tours/minutes et une pression moyenne effective de 5 bars, l'évolution du bruit de combustion en fonction du débit de carburant au moment de l'injection pilote pour le moteur de la figure 1. La valeur entourée Q₁ correspond au niveau de bruit obtenu sans correction de la cartographie de réglage. D'après ce graphique, on constate l'existence d'un optimum en bruit pour une valeur de Q₂ supérieure à la valeur Q₁. La modification de la cartographie de réglage peut donc consister à augmenter le débit de l'injection pilote, de préférence d'une valeur prédéfinie, de l'ordre de 1 mg/coup par rapport à un débit initial Q₁ imposé par dite cartographie de réglage.

On peut venir modifier le débit de l'injection pilote en complément ou en variante à la réduction du phasage de l'injection pilote.

Néanmoins, on préférera utiliser d'abord la correction par réduction du phasage de l'injection pilote de manière à ne pas engendrer une surconsommation de carburant.

Dans le mode de réalisation préféré, on diminuera en premier lieu le phasage de la injection pilote, puis on augmentera le débit de carburant de la injection pilote si cela s'avère nécessaire, c'est-à-dire si la température mesurée est toujours en-deçà du seul minimal T_{seuil_min}.

Quelle que soit la correction effectuée, le fait de réduire le phasage, c'est-à-dire de rapprocher l'injection pilote de injection principale et/ou d'en augmenter le débit a pour effet d'adoucir le gradient de pression entre injections pilote et principale, et de réduire par conséquent le bruit.

Grâce à l'invention, un même capteur de température peut être utilisé pour effectuer les corrections qui peuvent s'imposer pour revenir dans les limites de bruit acceptables pour le confort du conducteur, sur l'ensemble des cylindres.

La correction de la cartographie selon l'invention peut être appliquée dans tous les cas où le moteur de la figure 1 est appelé à fonctionner en richesse supérieure ou égale à 1. Typiquement, les phases de régénération du piège à oxydes d'azote font partie de ce cas. D'autres situations sont envisageables, notamment lors du démarrage à froid.

## Revendications

1. Procédé de commande d'un moteur à combustion pour véhicule automobile du type Diesel suralimenté par un turbo compresseur (3), ledit moteur comportant d'une part, un système de post traitement des gaz situé dans la ligne d'échappement et comprenant un filtre (6) à particules et un piège (5) à oxydes d'azote et d'autre part, un système (6, 9, 90, 91) à recirculation des gaz d'échappement à basse pression, **caractérisé en ce qu'**il comprend les étapes successives suivantes lors d'un mode de fonctionnement du moteur à richesse supérieure ou égale à 1 utilisant une cartographie de réglage prédéfinie:
- Mesure (S3) d'une température (T₂₁) représentative de la température dans le collecteur d'admission (1) ;
- Modification (S4, S5) de la cartographie de réglage lorsque la température (T₂₁) mesurée passe en-deçà d'un seul minimal (T_{seuil_min}) de température prédéterminé.

2. Procédé de commande selon la revendication 1, **caractérisé en ce que** l'étape de modification de la cartographie de réglage consiste à diminuer le phasage d'une injection pilote et/ou à augmenter le débit de carburant de ladite injection pilote.

3. Procédé de commande selon la revendication 1, **caractérisé en ce que** l'étape de modification de la cartographie de réglage consiste d'abord à diminuer le phasage de ladite injection pilote, puis à augmenter le débit de carburant de ladite injection pilote si la température mesurée est toujours en-deçà du seul minimal (T_{seuil_min}) de température prédéterminé.

4. Procédé de commande selon l'une quelconque des revendications 2 ou 3, **caractérisé en ce que** le phasage de ladite injection pilote est diminué d'environ 300 µsecondes par rapport à un phasage initial imposé par ladite cartographie de réglage.

5. Procédé de commande selon l'une quelconque des revendications 2 à 4, **caractérisé en ce que** le débit de carburant de l'injection pilote est augmenté d'environ 1mg/coup par rapport à un débit initial imposé par ladite cartographie de réglage.

6. Procédé de commande selon l'une quelconque des revendications précédentes, **caractérisé en ce que** la cartographie de réglage et le seul minimal (T_{seuil_min}) de température sont prédéterminés lors d'une phase (S1, S2) de calibration préalable.

7. Procédé de commande selon l'une quelconque des revendications précédentes, **caractérisé en ce que** la température (T₂₁) représentative de la température dans le collecteur d'admission (1) est mesurée par un capteur (15) de température placé entre le compresseur (32) et le collecteur d'admission (1).

8. Procédé de commande selon la revendication 7, **caractérisé en ce que**, le moteur comprenant un refroidisseur (14) pour refroidir le mélange air/gaz en recirculation entre ledit compresseur (32) et le collecteur d'admission (1), la température (T₂₁) représentative de la température dans le collecteur d'admission (1) est mesurée par un capteur (15) de température placé entre le refroidisseur (14) et le collecteur d'admission (1).

9. Procédé de commande selon la revendication 8, **caractérisé en ce que**, le moteur comprenant en outre un volet d'admission (13) entre le refroidisseur (14) et le collecteur d'admission (1), la température (T₂₁) représentative de la température dans le collecteur d'admission (1) est mesurée par un capteur (15) de température placé entre le volet d'admission (13) et le collecteur d'admission (1).

10. Procédé de commande selon l'une quelconque des revendications précédentes, **caractérisé en ce que** ledit mode de fonctionnement du moteur à richesse supérieure ou égale à 1 correspond à une phase de régénération du piège (5) à oxydes d'azote.
